# EUROPÄISCHE PATENTSCHRIFT

(11) **EP 2 916 052 B1**
(45) Veröffentlichungstag und Bekanntmachung des Hinweises auf die Patenterteilung: **12.04.2017**
(21) Anmeldenummer: 15155554.7
(22) Anmeldetag: 18.02.2015
(51) Int. Cl.: F16K 11/07, F16K 37/00, F16K 31/04, F16K 31/54, F15B 13/044, F15B 13/08

(54) **VENTILSCHEIBE**
Valve block
Bloque de vanne

(30) Priorität: 06.03.2014 DE 102014204066
(43) Veröffentlichungstag der Anmeldung: 09.09.2015
(73) Patentinhaber: ROBERT BOSCH GMBH, 70442 Stuttgart (DE)
(72) Erfinder: Jessen, Soenke, 71732 Tamm (DE); Schindler, Manfred, 85570 Markt Schwaben (DE); Sinseder, Franz, 84405 Dorfen (DE)
(74) Vertreter: Maiß, Harald

(56) Entgegenhaltungen:
- DE-U1-202007 017 894
- US-A- 2 648 352
- US-A1- 2009 178 713

## Beschreibung

Die Erfindung betrifft eine Ventilscheibe gemäß dem Oberbegriff des Patentanspruchs 1 und einen Ventilblock mit derartigen Ventilscheiben.

Bei bekannten als Schieberventil ausgebildeten Ventilscheiben mit elektromechanischer Steuerung eines in der Ventilscheibe enthaltenen Steuerschiebers wird zur translatorischen Verschiebung des Steuerschiebers eine rotatorische Bewegung einer regelbaren Antriebseinrichtung, meist eines Elektromotors, in die benötigte translatorische Bewegung umgewandelt. Dabei können Querkräfte an dem Steuerschieber entstehen, die die Verschiebbarkeit und somit die genaue Positionierung des Steuerschiebers negativ beeinflussen.

Aus der DE 20 2007 017 894 U1 ist ein hydraulisches Steuerventilsystem bekannt, das eine Mehrzahl von nebeneinander angeordneten Steuerventilsegmenten aufweist, wobei jedes Steuerventilsegment eine verschiebbare Ventilstange umfasst. Je nach Stellung der Ventilstange schließt oder öffnet diese eine erste beziehungsweise zweite Leitung in dem Steuerventilsegment. Zur translatorischen Verschiebung der Ventilstange sind an jedem Steuerventilsegment ein Elektromotor und ein Kupplungsmechanismus vorgesehen. Zur Umwandlung der rotatorischen Bewegung des Elektromotors in die erforderliche translatorische Bewegung umfasst der Kupplungsmechanismus eine Zahnstange, die direkt an der Ventilstange befestigt ist oder eine Verlängerung der Ventilstange bildet und vom Elektromotor über ein Zahnrad angetrieben wird. Die Zahnstange wird auf der dem Zahnrad entgegengesetzten Seite von einer Rolle geführt und liegt mit der Ventilstange auf einer gemeinsamen Ventilstangenachse. Die DE 20 2007 017 894 U1 betont wiederholt, dass eine große Starrheit beim Festhalten der Ventilstange sehr wichtig ist für eine genaue Verschiebung und für ein Festhalten und eine Stabilisierung der Position der Ventilstange.

Nachteilig daran ist, dass durch Fertigungs- und/oder Montagetoleranzen auftretende Fluchtungsfehler zwischen der Zahnstange und der Ventilstange Querkräfte auf die Ventilstange übertragen werden, die die Verschiebbarkeit der Ventilstange und die Genauigkeit der Positionierung beinträchtigen können.

Dem gegenüber liegt der Erfindung die Aufgabe zu Grunde, eine Ventilscheibe zu schaffen, bei der die Querkräfte auf einen Steuerschieber möglichst gering sind, um eine leichte Verschiebbarkeit des Steuerschiebers und eine hohe Genauigkeit bei der Positionierung des Steuerschiebers zu gewährleisten.

Diese Aufgabe wird gelöst durch eine Ventilscheibe mit den Merkmalen des Patentanspruchs 1 und durch einen Ventilblock mit den Merkmalen des Patentanspruchs 11.

Vorteilhafte Weiterbildungen der Ventilscheibe sind in den Patentansprüchen 2 bis 10 beschrieben.

Eine Ventilscheibe gemäß der vorliegenden Erfindung hat einen Grundkörper, in dem ein Steuerschieber bewegbar aufgenommen ist. Weiter hat die Ventilscheibe ein Zahnradgetriebe und einen Elektromotor, wobei der Elektromotor in Drehantriebsverbindung mit dem Zahnradgetriebe steht und das Zahnradgetriebe eine mit dem Steuerschieber verbundene Zahnstange antreibt. Erfindungsgemäß ist die Zahnstange über eine biegeelastische Koppelstange fest, insbesondere im Wesentlichen drehfest, mit dem Steuerschieber verbunden.

Ein Vorteil der Erfindung ist, dass durch die biegeelastische Koppelstange auftretende Fluchtungsfehler zwischen der Zahnstange und dem Steuerschieber ausgleichbar sind und so die Querkräfte auf den Steuerschieber möglichst gering gehalten werden können. Dies wiederum gewährleistet eine leichte Verschiebbarkeit des Steuerschiebers und eine hohe Genauigkeit bei der Positionierung des Steuerschiebers.

Erfindungsgemäß ist auf mindestens zwei gegenüber liegenden Seiten der Zahnstange eine Verzahnung ausgebildet. Alternativ dazu kann die Zahnstange eine umlaufende, insbesondere rotationssymmetrisch bezüglich der Mittelachse ausgebildete, Verzahnung aufweisen. Vorteilhafterweise ist bei einer Zahnstange mit umlaufender Verzahnung eine Sicherung gegen ein Verdrehen um die Mittelachse nicht erforderlich. Die Fertigung einer solchen umlaufenden Verzahnung ist mit geringem Aufwand und hoher Präzision möglich, insbesondere ist die Verzahnung als Aufsatzstück zum Aufsetzen auf die Zahnstange ausgebildet.

Das Zahnradgetriebe weist ein erstes Ausgangszahnrad und ein erstes Gegenzahnrad auf. Dabei ist das erste Ausgangszahnrad um eine erste Drehachse drehbar und das erste Gegenzahnrad ist um eine zweite Drehachse drehbar. Das erste Ausgangszahnrad und das erste Gegenzahnrad sind mit der Verzahnung in Eingriff, und deren Drehachsen sind etwa parallel auf gegenüberliegenden Seiten der Zahnstange ausgerichtet. Damit stützen und führen die beiden Zahnräder die Zahnstange und halten die Zähne in Eingriff. Insbesondere sind die erste Drehachse und die zweite Drehachse etwa senkrecht zur Mittelachse ausgerichtet. Weiterhin sind das erste Ausgangszahnrad und das erste Gegenzahnrad achsensymmetrisch zur Mittelachse des Steuerschiebers angeordnet, mit der auch die Zahnstange fluchtet.

Der Grundkörper kann zwei etwa parallele Anlageebenen aufweisen. Weiter kann eine Mittelachse etwa parallel zu den Anlageebenen ausgerichtet sein. Weiter kann das Zahnradgetriebe, der Elektromotor und die Zahnstange zwischen den beiden Anlageebenen angeordnet sein. Anlageebene ist als eine über eine gegenständliche Fläche hinaus vergrößerte Ebene zu verstehen. Damit können das Zahnradgetriebe, der Elektromotor und die Zahnstange platzsparend an einer erfindungsgemäßen Ventilscheibe angeordnet werden und mehrere Ventilscheiben platzsparend zu einem Ventilblock kombiniert werden.

Vorteilhafterweise sind die Koppelstange und die Zahnstange etwa in einer Flucht mit der Mittelachse des Steuerschiebers angeordnet. Dies verringert die Querkräfte auf den Steuerschieber. Weiter vorteilhaft ist der Elektromotor benachbart zu der Koppelstange angeordnet. Dies hat den Vorteil einer kompakten platzsparenden Bauweise. Insbesondere ist die Länge des Elektromotors in Antriebsachse gesehen größer als ein Durchmesser des Elektromotors. Dies trägt weiter zu einer kompakten platzsparenden Bauweise bei.

Die Koppelstange kann mindestens einen etwa zylinderförmigen Abschnitt mit einem Durchmesser zwischen 1 mm und 6 mm aufweisen. Durch eine mindestens abschnittweise dünne Koppelstange wird deren Biegeelastizität erhöht, wodurch auftretende Fluchtungsfehler zwischen der Zahnstange und dem Steuerschieber besser ausgleichbar sind und den oben erwähnten Vorteil der Verringerung von Querkräften auf den Steuerschieber hat. Vorteilhafterweise beträgt der Durchmesser des mindestens einen etwa zylinderförmigen Abschnitts 4 mm, wobei die Durchbiegung etwa 0,1 mm beträgt.

Vorteilhafterweise ist die Koppelstange gesondert vom Steuerschieber ausgebildet, wobei die Koppelstange mit dem Steuerschieber drehfest verbunden ist, insbesondere mit dem Steuerschieber verschraubt oder verpresst ist. Dies ist insbesondere von Vorteil für das Anbringen einer Dichtung, beispielsweise eines O-Rings, auf der Koppelstange.

Gemäß einem weiteren Ausführungsbeispiel kann die Koppelstange einstückig mit dem Steuerschieber und/oder der Zahnstange ausgebildet sein.

Vorteilhafterweise verhindert die oben erwähnte umlaufende, insbesondere rotationssymmetrisch bezüglich der Mittelachse ausgebildete, Verzahnung der Zahnstange ein Verkanten zwischen den mit der Zahnstange in Eingriff befindlichen Zahnrädern, insbesondere dem ersten Ausgangszahnrad und dem ersten Gegenzahnrad, und der Zahnstange bei axialer Verdrehung der Zahnstange.

Weiter vorteilhaft wird durch einander genau gegenüberliegende in die Verzahnung der Zahnstange eingreifende Zahnräder keine nennenswerte durch einen Zahneingriff resultierende Querkraft auf die Zahnstange und somit auf den Steuerschieber erzeugt. Somit kann eine Wahl der Zahngeometrie weitgehend unabhängig von den dadurch üblicherweise erzeugten Querkräften erfolgen.

Insbesondere ist das erste Ausgangszahnrad derart mit einem zweiten Ausgangszahnrad drehfest verbunden, dass sie zusammen um die gemeinsame erste Drehachse drehbar sind. Zusätzlich dazu kann das erste Gegenzahnrad derart mit einem zweiten Gegenzahnrad drehfest verbunden sein, dass sie zusammen um die gemeinsame zweite Drehachse drehbar sind, wobei das zweite Ausgangszahnrad mit dem zweiten Gegenzahnrad in Eingriff ist.

Insbesondere ist das erste Ausgangszahnrad derart mit einem dritten Ausgangszahnrad drehfest verbunden, dass sie zusammen um die gemeinsame erste Drehachse drehbar sind.

Insbesondere ist das zweite Ausgangszahnrad und das dritte Ausgangszahnrad auf gegenüberliegenden Seiten der Zahnstange angeordnet. Alternativ dazu können das zweite Ausgangszahnrad und das dritte Ausgangszahnrad auf derselben Seite der Zahnstange angeordnet sein.

Vorteilhafterweise weist das Zahnradgetriebe ein am Elektromotor angebrachtes erstes Eingangszahnrad und ein damit in Eingriff befindliches zweites Eingangszahnrad auf. Insbesondere liegt eine Antriebsachse des Elektromotors, um die das erste Eingangszahnrad drehbar ist, in einer Ebene mit der Mittelachse. Alternativ oder ergänzend dazu kann die Antriebsachse etwa parallel zu der Mittelachse ausgerichtet sein oder etwa senkrecht auf der Mittelachse stehen. Weiter vorteilhaft ist ein drittes Eingangszahnrad des Zahnradgetriebes mit dem zweiten Eingangszahnrad drehfest verbunden, so dass sie zusammen um eine gemeinsame dritte Drehachse drehbar sind. Insbesondere ist die dritte Drehachse etwa senkrecht zur Mittelachse und/oder den Anlageebenen ausgerichtet. Weiter vorteilhaft ist die dritte Drehachse etwa parallel zu der ersten Drehachse und/oder der zweiten Drehachse ausgerichtet.

Gemäß einem Ausführungsbeispiel der Erfindung ist das dritte Eingangszahnrad mit dem dritten Ausgangszahnrad in Eingriff.

Gemäß einem weiteren Ausführungsbeispiel weist das Zahnradgetriebe ein Doppelzahnrad auf, das ein erstes Stirnrad und ein damit drehfest verbundenes zweites Stirnrad enthält, die zusammen um eine gemeinsame vierte Drehachse drehbar sind. Das dritte Eingangszahnrad ist dabei in Eingriff mit dem zweiten Stirnrad und das erste Stirnrad ist mit dem dritten Ausgangszahnrad in Eingriff. Vorteilhafterweise ist das erste Stirnrad kleiner als das zweite Stirnrad. Insbesondere ist die vierte Drehachse etwa senkrecht zur Mittelachse ausgerichtet. Weiter vorteilhaft ist die vierte Drehachse etwa parallel zu der ersten Drehachse, der zweiten Drehachse und/oder der dritten Drehachse ausgerichtet.

Insbesondere ist die Summe der Durchmesser des zweiten Ausgangszahnrads und des zweiten Gegenzahnrades größer als die Summe der Durchmesser des ersten Ausgangszahnrads und des ersten Gegenzahnrads. Vorteilhafterweise ist dadurch ein Zwischenraum zwischen dem ersten Ausgangszahnrad und dem ersten Gegenzahnrad erzeugt, in den die Zahnstange passt.

Vorteilhafterweise sind die Zahnräder des Zahnradgetriebes mit Ausnahme des zweiten Eingangszahnrads als Stirnzahnräder ausgebildet. Weiter vorteilhaft sind die Zahnräder des Zahnradgetriebes aus Kunststoff hergestellt, insbesondere aus faserverstärktem Polyamid.

Insbesondere durch die oben beschriebene Ausrichtung der Mittelachse, der Antriebsachse und/oder der Drehachsen - etwa parallel zueinander und etwa senkrecht zu den Anlageebenen - ist eine platzsparende Anordnung der Zahnräder in dem Zahnradgetriebe erreichbar, die beispielsweise beim Einsatz der Ventilscheibe in einem Kraftfahrzeug mit seinem beschränkten Raumangebot erhebliche Vorteile bietet.

Vorteilhafterweise ist mindestens eine Schraubenfeder an einem Ende des Steuerschiebers angeordnet, welche die Koppelstange umgibt, wobei die Schraubenfeder gegen den Steuerschieber verspannt ist. Vorteilhaft verschiebt die mindestens eine Schraubenfeder den Steuerschieber in einem stromlosen Zustand des Elektromotors in eine vordefinierte Stellung, wobei das Zahnradgetriebe ohne Selbsthemmung ausgeführt ist. Weiter vorteilhaft spart diese Anordnung Bauraum ein und ermöglicht eine lange und damit besonders biegsame Koppelstange.

Eine oben erwähnte axiale Verdrehung der Zahnstange kann insbesondere durch ein Ein- und Ausfedern der mindestens einen an dem Steuerschieber angeordneten Schraubenfeder hervorgerufen werden.

Die mindestens eine Schraubenfeder kann in einem abgeschlossenen Federraum aufgenommen sein, welcher an einen Tank anschließbar ist. Die an einem Steuerschieber grundsätzlich auftretende Leckagemenge an Hydraulikflüssigkeit kann so dem Tank zugeführt werden. Der Federraum ist vorteilhafterweise von einem Federgehäuse umschlossen.

Insbesondere ist der Federraum an dem Grundkörper oder an dem Gehäuse vorgesehen, wobei der Federraum mit einem Tank verbindbar ist und/oder der Steuerschieber ist auf beiden Seiten stirnseitig mit einem Tank verbindbar. Vorteilhafterweise wird dabei der Anteil an nicht mit Druckmittel beaufschlagten Flächen, sogenannten Differenzflächen, möglichst klein gehalten. Vorteilhafterweise werden dadurch Druckschwankungen im Tank, insbesondere in einem Tankrücklauf, ausgeglichen, so dass sie praktisch keine Auswirkung auf den Steuerschieber haben. Weiter vorteilhaft ist so die an dem Steuerschieber grundsätzlich auftretende Leckagemenge an Hydraulikflüssigkeit dem Tank zuführbar.

Insbesondere ist eine der Stirnflächen des Steuerschiebers mindestens zu 80% mit Druckmittel beaufschlagt und eine andere der Stirnflächen des Steuerschiebers ist zu 100% mit Druckmittel beaufschlagt. Vorteilhafterweise ist die eine der Stirnflächen des Steuerschiebers ist mindestens zu 90% oder 95% mit Druckmittel beaufschlagt.

Insbesondere ist an dem Federgehäuse mindestens eine Dichtung, vorzugsweise ein O-Ring, vorgesehen, welche die Koppelstange, vorzugsweise deren etwa zylinderförmigen Abschnitt, gleitend anliegend umgibt.

Vorteilhafterweise enthält die Stellungserfassungseinrichtung mindestens einen Permanentmagnet und mindestens einen nach dem Hall-, 3D-Hall- oder dem AMR-Prinzip arbeitenden Sensor. Das AMR-Prinzip nutzt den anisotropen magnetoresistiven Effekt, der sich besonders gut in einer dünnen Schicht (ca. 20 nm) aus Permalloy, einer Legierung aus Nickel (81 %) und Eisen (19 %), beobachten lässt. Es lässt sich feststellen, dass der elektrische Widerstand der Schicht abhängig vom äußeren Magnetfeld ist. Dabei haben nur Magnetfeldkomponenten in der Schichtebene einen merklichen Einfluss auf den Widerstand. Dieser ist am größten, wenn das äußere Magnetfeld in der Stromrichtung oder gegen die Stromrichtung gerichtet ist. Am kleinsten ist der Widerstand, wenn das äußere Magnetfeld senkrecht zur Stromrichtung in der Schichtebene gerichtet ist (siehe Wikipedia: http://de.wikipedia.org/wiki/Anisotroper_magnetoresistiver_Effekt). Die Vorteile der Verwendung des Sensors nach dem AMR-Prinzip sind seine Einfachheit und seine Genauigkeit.

Weiter vorteilhaft ist der Permanentmagnet mit dem zweiten Ausgangszahnrad drehfest verbunden. Alternativ oder ergänzend dazu kann der Permanentmagnet mit dem ersten Ausgangszahnrad, dem dritten Ausgangszahnrad, dem ersten Gegenzahnrad oder dem zweiten Gegenzahnrad drehfest verbunden sein. Insbesondere ist der Sensor in einer zum Detektieren einer Richtung eines magnetischen Feldes des Permanentmagneten geeigneten Lage und Entfernung zu dem Permanentmagneten angeordnet. Alternativ oder ergänzend dazu kann der Permanentmagnet mit der Koppelstange drehfest verbunden sein, wobei der Sensor vorteilhaft in einer zum Detektieren einer Position des Permanentmagneten geeigneten Lage und Entfernung zu dem Permanentmagneten angeordnet ist. Vorteilhafterweise ist der mit der Koppelstange drehfest verbundene Permanentmagnet ringförmig ausgebildet.

Vorteilhafterweise ist der Sensor auf einer Platine angeordnet, die auch die Lageregeleinrichtung enthält, wobei die Platine zwischen den Anlageebenen angeordnet und etwa parallel zu diesen ausgerichtet ist.

Alternativ zu den oben erwähnten Sensoren können auch andere magnetfeldabhängige Sensoren verwendet werden wie beispielsweise Feldplatten, die allerdings bestimmte Einschränkungen im Temperaturbereich aufweisen und in der Herstellung relativ aufwändig sind. Daneben können Sensoren verwendet werden, die magnetisch-resistive Effekte nutzen, die unter der Bezeichnung X-Magneto-Resistive zusammengefasst sind wie beispielsweise Anisotropic Magneto-Resistive (AMR), Giant Magneto-Resistive (GMR), Tunneling Magneto-Resistive (TMR), Colossal Magneto-Resisitive (CMR) und Extraordinary Magneto-Resistive (EMR). Mit dem Giant Magnetic-Inductance (GMI) kann auch ein Sensor verwendet werden, der einen magnetisch induzierten Effekt nutzt (siehe http://www.itwissen.info/definition/lexikon/Magnetfeldsensor-magnetic-field-sensor.html).

Vorteilhafterweise ist mindestens eine etwa parallel zu den Anlageebenen ausgerichtete Abschirmplatte mit einer magnetischen Permeabilität zwischen 50.000 und 140.000 derart zwischen den Anlageebenen angeordnet, dass das magnetische Feld des Permanentmagneten nach außen abgeschirmt ist. Insbesondere kann die Abschirmplatte mit den Anlageebenen zusammenfallen. Vorteilhafterweise ist die Abschirmplatte derart angeordnet, dass der Sensor abgeschirmt ist von externen Magnetfeldern, wie beispielsweise denen benachbarter Ventilscheiben. Dabei darf der Permanentmagnet, dessen Magnetfeldrichtung erfasst werden soll, von dem Sensor, der die Magnetfeldrichtung des Permanentmagneten erfassen soll, nicht durch die Abschirmplatte getrennt sein.

Die Abschirmplatte besteht vorzugsweise aus Mu-Metall (µ Metall), das eine hohe Permeabilität (µr =50.000-140.000) besitzt, die bewirkt, dass sich der magnetische Fluss niederfrequenter Magnetfelder im Material konzentriert. Dieser Effekt führt bei der Abschirmung niederfrequenter oder statischer magnetischer Störfelder zu einer beachtlichen Schirmdämpfung (siehe Wikipedia: http://de.wikipedia.org/wiki/Mu-Metall).

Ein Vorteil einer Messung der Magnetfeldrichtung, das heißt im vorliegenden Fall insbesondere einer Messung einer Verdrehung eines Zahnrades, ist, dass sie günstiger und zuverlässiger ist als beispielsweise eine Messung der magnetischen Feldstärke. Zudem entsteht kein Genauigkeitsnachteil, da außerhalb der Mittelstellung des Steuerschiebers hydraulische Kräfte wirken, welche den Steuerschieber in eine definierte Richtung ziehen, so dass das Zahnradgetriebe spielfrei ist.

Vorteilhafterweise ist ein Gehäuse vorgesehen, das den Elektromotor und das Zahnradgetriebe umschließt, wobei das Gehäuse mit dem Grundkörper verbindbar ist und das Gehäuse zwei gegenüberliegende Anlageflächen aufweist, die mit den Anlageebenen etwa in einer Ebene liegen.

Ein Ventilblock enthält mehrere erfindungsgemäße Ventilscheiben, wobei die Anlageebenen unmittelbar benachbarter Ventilscheiben zusammenfallen. Insbesondere sind mehrere Ventilscheiben als einzelne Bauteile zu einem Ventilblock zusammengesetzt oder einstückig als ein Monoblock ausgebildet.

Vorteilhafterweise sind eine Stellungserfassungseinrichtung und der Elektromotor an eine zwischen den Anlageebenen angeordnete Lageregeleinrichtung für den Steuerschieber angeschlossen. Der Elektromotor kann als ein Gleichstrommotor ausgebildet sein.

Eine Antriebsachse des Elektromotors kann etwa parallel zu der Mittelachse oder etwa senkrecht zu der Mittelachse ausgerichtet sein. Vorteilhafterweise liegt die Antriebsachse in einer etwa parallel zu der Anlageebene ausgerichteten Ebene mit der Mittelachse.

Im Folgenden werden zwei Ausführungsbeispiele einer erfindungsgemäßen Ventilscheibe in fünf Zeichnungen näher erläutert. Es zeigen:
Figur 1 ein erstes Ausführungsbeispiel einer erfindungsgemäßen Ventilscheibe in einer räumlichen Schnittansicht gemäß dem in Figur 2 angegebenen Verlauf A - A,
Figur 2 eine Ansicht der in Figur 1 dargestellten Ventilscheibe mit Blickrichtung entlang der Zahnstange,
Figur 3 ein zweites Ausführungsbeispiel einer erfindungsgemäßen Ventilscheibe in einer räumlichen Ansicht,
Figur 4 einen Längsschnitt eines Federgehäuses, und
Figur 5 eine schematische Darstellung eines Ventilblocks, der mehrere erfindungsgemäße Ventilscheiben enthält.

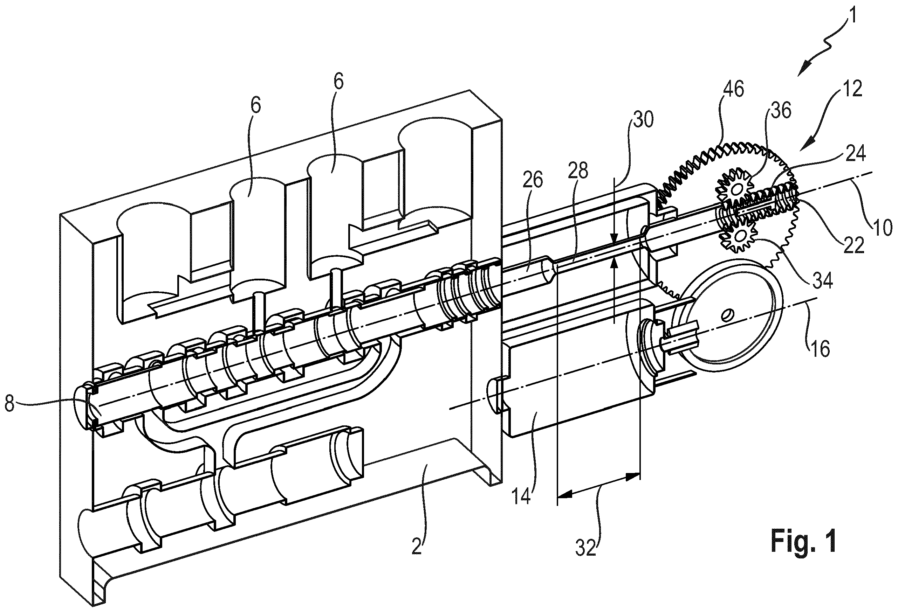

Das in Figur 1 dargestellte Ausführungsbeispiel einer erfindungsgemäßen Ventilscheibe (1) hat einen Grundkörper (2) mit planparallelen Anlageebenen (4). Innerhalb des Grundkörpers (2) ist ein Steuerschieber (8) angeordnet, der entlang einer parallel zu den Anlageebenen (4) ausgerichteten Mittelachse (10) verschiebbar ist und dessen unterschiedliche Durchmesser je nach Stellung des Steuerschiebers (8) mit einem Druckmittel befüllte Leitungen zu Arbeitsanschlüssen (6) öffnen oder schließen.

Stirnseitig an den Steuerschieber (8) schließt sich eine mit dem Steuerschieber (8) drehfest verbundene Koppelstange (26) an, die ihrerseits mit einer Zahnstange (22) drehfest verbunden ist. Der Steuerschieber (8), die Koppelstange (26) und die Zahnstange (22) liegen auf der ihnen gemeinsamen Mittelachse (10) und sind drehfest miteinander verbunden. Die Koppelstange hat einen zylinderförmigen Abschnitt (28) mit einem Durchmesser (30) zwischen 1 mm und 6 mm, wobei eine Länge (32) des etwa zylinderförmigen Abschnitts (28) zwischen 40 mm und 200 mm beträgt.

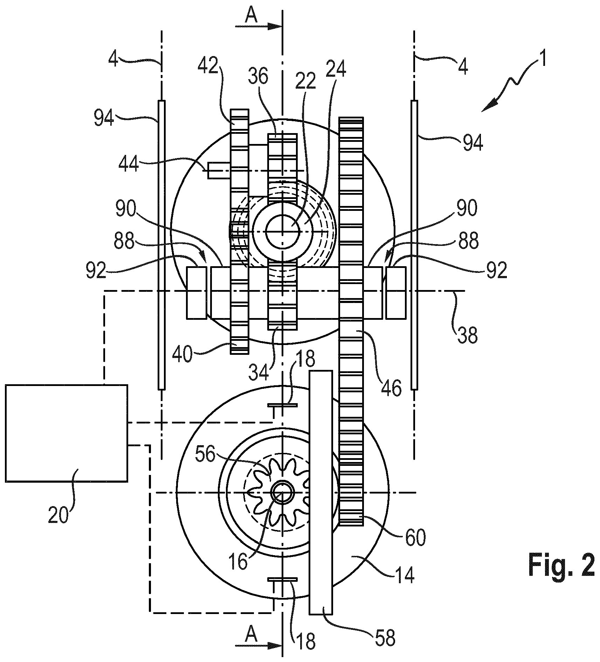

Anhand der in Figur 2 dargestellten Ansicht der Ventilscheibe gemäß Figur 1 mit Blickrichtung auf die Zahnstange (22) wird nun das Zahnradgetriebe (12) beschrieben.

An dem Grundkörper (2) ist ein Elektromotor (14) mit einer parallel zu der Mittelachse (10) ausgerichteten Antriebsachse (16) vorgesehen, wie auch in Figur 1 dargestellt. Der Elektromotor ist über Stromanschlüsse (18) an eine Lageregeleinrichtung (20) für den Steuerschieber (8) angeschlossen.

Auf der Antriebsachse (16) des Elektromotors (14) sitzt ein erstes Eingangszahnrad (56), das ein hier als Kronrad ausgebildetes zweites Eingangszahnrad (58) antreibt. Alternativ dazu kann das erste Eingangszahnrad (56) und das zweite Eingangszahnrad (58) als Kegelradpaar ausgebildet sein. Drehfest mit dem zweiten Eingangszahnrad (58) verbunden und um eine gemeinsame dritte Drehachse (62) drehbar ist ein drittes Eingangszahnrad (60) mit einem dritten Ausgangszahnrad (46) in Eingriff. Die Antriebsachse (16) und die dritte Drehachse (62) stehen senkrecht aufeinander, alternativ dazu können sich die Antriebsachse (16) und die dritte Drehachse (62) in einem beliebigen Winkel schneiden. Ein zweites Ausgangszahnrad (40) und ein erstes Ausgangszahnrad (34) sind drehfest mit dem dritten Ausgangszahnrad (46) verbunden und um eine gemeinsame erste Drehachse (38) drehbar. Das erste Ausgangszahnrad (34) kämmt mit einer Verzahnung (24) einer Zahnstange (22), wodurch eine Rotationsbewegung in eine Translationsbewegung umgewandelt ist. Mit der Zahnstange (22) ist über die Koppelstange (26) der Steuerschieber (8) entlang seiner Mittelachse (10) verschiebbar und so, wie oben erwähnt, die Arbeitsanschlüsse (6) mit Druckmittel beaufschlagbar oder vom Druckmittelfluss trennbar.

Die Stellungserfassungseinrichtung (88) enthält mindestens einen Permanentmagnet (90) und mindestens einen nach dem Hall-, 3D-Hall- oder dem AMR-Prinzip arbeitenden Sensor (92). In Figur 2 ist dargestellt, dass der Permanentmagnet (90) mit dem zweiten Ausgangszahnrad (40) drehfest verbunden ist und der Sensor (92) zum Detektieren einer Richtung eines magnetischen Feldes des Permanentmagneten (90) direkt neben dem Permanentmagnet (90) innerhalb der Anlageebenen angeordnet ist. In Figur 2 ist zusätzlich dargestellt, dass der Permanentmagnet (90) mit dem dritten Ausgangszahnrad (46) drehfest verbunden ist und der Sensor (92) zum Detektieren der Richtung des magnetischen Feldes des Permanentmagneten (90) direkt neben dem Permanentmagnet (90) innerhalb der Anlageebenen angeordnet ist. In der Praxis wird es ausreichen, den Permanentmagnet (90) und den Sensor (92) nur auf einer Seite anzuordnen.

Zur Verdeutlichung der Anschlüsse ist in Figur 2 die Lageregeleinrichtung (20) außerhalb der Anlageebenen (4) dargestellt. Gemäß der Erfindung befindet sich die Lageregeleinrichtung (20) zwischen den Anlageebenen (4) und der Sensor (92) ist auf derselben Platine angeordnet, wie die Lageregeleinrichtung (20). Die Platine ist platzsparend zwischen den Anlageebenen (4) angeordnet und etwa parallel zu diesen ausgerichtet.

Zwischen den Anlageebenen (4) sind Abschirmplatten (94) angeordnet zur Abschirmung des magnetischen Feldes des Permanentmagneten (90) nach außen und/oder zur Abschirmung des Sensors (92) vor magnetischen Feldern von außen.

Mit dem zweiten Ausgangszahnrad (40) in Eingriff steht ein zweites Gegenzahnrad (42), das drehfest mit einem ersten Gegenzahnrad (36) verbunden ist und um eine gemeinsame zweite Drehachse (44) drehbar ist. Das erste Gegenzahnrad (36) kämmt mit der Verzahnung (24) der Zahnstange (22) und so ist die Zahnstange (22) auch von dem ersten Gegenzahnrad (36) angetrieben. Ein erster Durchmesser des ersten Ausgangszahnrads (34) und des ersten Gegenzahnrads (36) und ein zweiter Durchmesser des zweiten Ausgangszahnrads (40) und des zweiten Gegenzahnrads (42) sind gleich groß, wobei die zweiten Durchmesser des zweiten Ausgangszahnrads (40) und des zweiten Gegenzahnrads (42) größer sind als die ersten Durchmesser des ersten Ausgangszahnrads (34) und des ersten Gegenzahnrads (36), damit die Zahnstange (22) zwischen dem ersten Ausgangszahnrad (34) und dem ersten Gegenzahnrad (36) Platz hat.

Insbesondere durch oben beschriebene Ausrichtung der Drehachsen (38, 44, 54, 62) ist eine platzsparende Anordnung der Zahnräder in dem Zahnradgetriebe (12) erreicht, die insbesondere beim Einsatz der Ventilscheibe (1) in einem Kraftfahrzeug mit seinem beschränkten Raumangebot erhebliche Vorteile bietet.

Auf diese Weise und durch die aus Figur 1 ersichtliche zur Mittelachse (10) achsensymmetrische Anordnung des ersten Ausgangszahnrads (34) und des ersten Gegenzahnrads (36) ist die Zahnstange (22) praktisch frei von einer auf sie wirkenden Querkraft antreibbar.

Bei dem in Figur 1 dargestellten Ausführungsbeispiel sind wegen der Schnittdarstellung das zweite Ausgangszahnrad (40) und das zweite Gegenzahnrad (42) nicht dargestellt.

Selbst etwa durch Fertigungs- und/oder Montagetoleranzen auftretende Fluchtungsfehler zwischen der Zahnstange (22) und dem Steuerschieber (8) können bei der erfindungsgemäßen Ventilscheibe keine nennenswerten Querkräfte auf den Steuerschieber (8) übertragen, weil die durch den mindestens einen zylinderförmigen Abschnitt (28) mit reduziertem Durchmesser (30) biegeelastisch ausgebildete Koppelstange (26) keine nennenswerten Querkräfte auf den Steuerschieber (8) überträgt.

Mit diesem Aufbau ist der Steuerschieber (8) zur genauen Positionierung über die Lageregeleinrichtung (20) von dem Elektromotor (14) lagegeregelt verschiebbar.

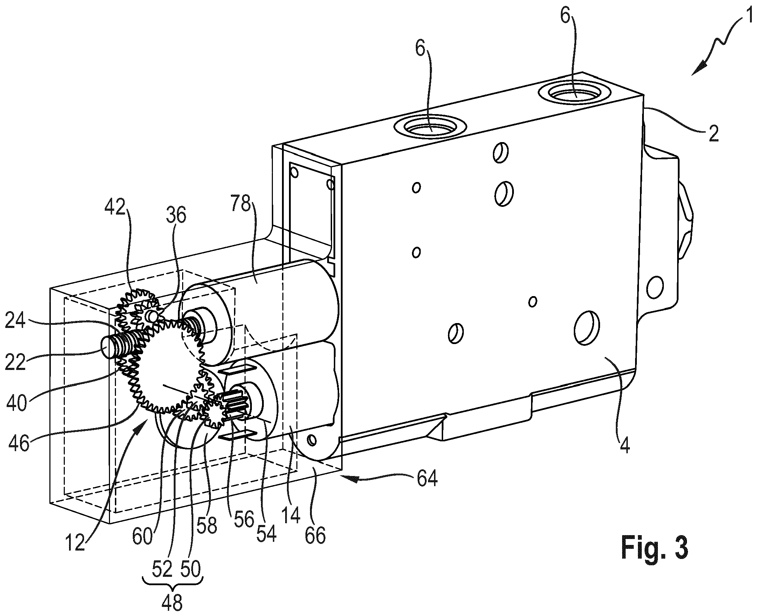

Bei dem in Figur 3 dargestellten weiteren Ausführungsbeispiel ist gegenüber dem in Figur 1 dargestellten Ausführungsbeispiel zusätzlich ein Doppelzahnrad (48) vorgesehen. Das Doppelzahnrad (48) enthält ein erstes Stirnrad (50) und ein damit drehfest verbundenes zweites Stirnrad (52), die zusammen um eine gemeinsame vierte Drehachse (54) drehbar sind. Das mit dem zweiten Eingangszahnrad (58) drehfest verbundene dritte Eingangszahnrad (60) ist in Eingriff mit dem zweiten Stirnrad (52) und das erste Stirnrad (50) ist mit dem dritten Ausgangszahnrad (46) in Eingriff. Das erste Stirnrad (50) ist kleiner als das zweite Stirnrad (52), somit weist das dritte Ausgangszahnrad (46) einen kleineren Durchmesser auf als bei dem in Figur 1 dargestellten Ausführungsbeispiel.

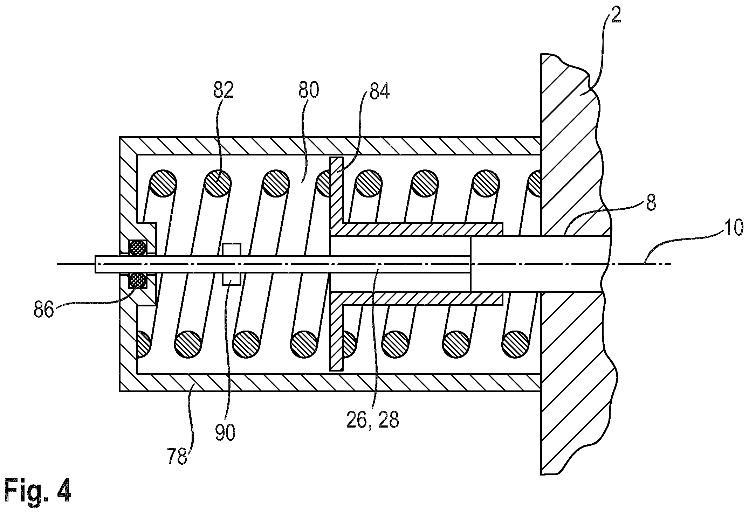

Das in Figur 4 dargestellte Federgehäuse (78) kann bei jedem der zuvor beschriebenen Ausführungsbeispiele einer erfindungsgemäßen Ventilscheibe (1) zum Einsatz kommen. Das Federgehäuse (78) ist an dem Grundkörper (2) angeordnet und umschließt einen Federraum (80) mit einer Schraubenfeder (82), die den Steuerschieber (8) über einen mit dem Steuerschieber (8) verbundenen Federteller (84) in einer vordefinierten Stellung hält. Der Federraum (80) kann alternativ als ein Hohlraum in dem Gehäuse (64) ausgebildet sein, so dass das Federgehäuse (78) als eine Wandung des Hohlraums ausgebildet ist. Bei dem ohne Selbsthemmung ausgeführten Zahnradgetriebe (12) ist so der Steuerschieber (8) in einem stromlosen Zustand des Elektromotors (14) in die vordefinierte Stellung gebracht.

An der Koppelstange (26) ist ein ringförmiger Permanentmagnet (90) angeordnet. Der zu der Stellungserfassungseinrichtung gehörende Sensor zum Detektieren einer Position des Permanentmagneten (90) ist hier nicht dargestellt.

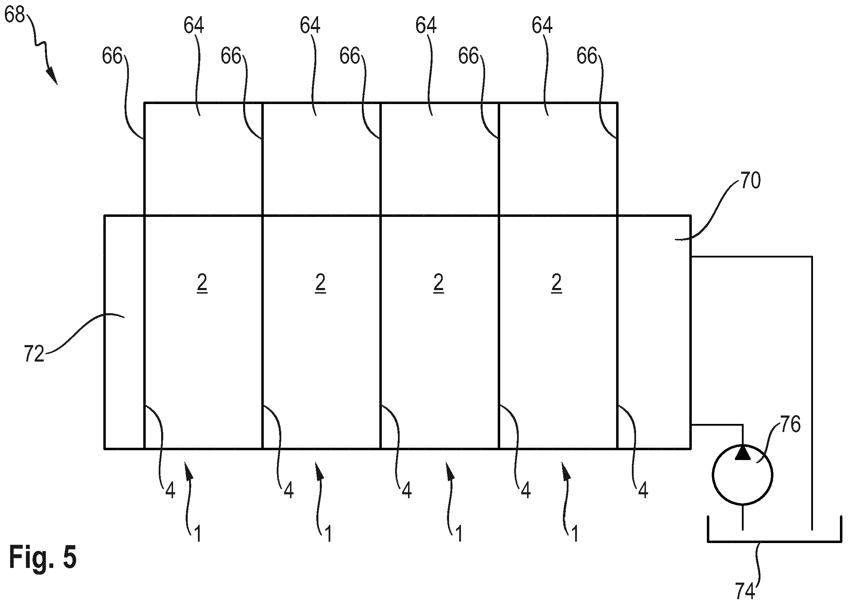

Ein in Figur 5 schematisch dargestellter Ventilblock (68) enthält mehrere erfindungsgemäße Ventilscheiben (1), wobei die Ventilscheiben gemäß dem ersten und/oder dem zweiten Ausführungsbeispiel ausgebildet sein können. Die Anlageebenen (4) unmittelbar aneinander grenzender Ventilscheiben (1) fallen zusammen. Mit jedem Grundkörper (2) der Ventilscheiben (1) ist ein Gehäuse (64) verbunden, das jeweils den Elektromotor (14) und das Zahnradgetriebe (12) umschließt. Das Gehäuse (64) ist von zwei gegenüberliegenden Anlageflächen (66) begrenzt, die mit den Anlageebenen (4) des jeweiligen Grundkörpers (2) etwa in einer Ebene liegen. Um sicherzustellen, dass jeweils die Anlageebenen (4) aneinander anliegen und nicht die Anlageflächen (66), ist in der Praxis der Abstand zwischen den Anlageflächen (66) mit einer Minustoleranz ausgeführt.

Die mehreren Ventilscheiben (1) sind als einzelne Bauteile zu einem Ventilblock (68) zusammengesetzt, können aber auch einstückig als ein Monoblock ausgebildet sein. Eine Anschlussplatte (70) und eine Endplatte (72) bilden einen Abschluss des Ventilblocks (68) zu den Seiten. Über die Anschlussplatte (70) ist der Ventilblock (68) mit dem Tank (74) mit Hydraulikflüssigkeit verbunden, die von einer zugeordneten Pumpe (76) gefördert wird. Der Ventilblock (68) kann erfindungsgemäße Ventilscheiben (1) gemäß jedem der zuvor beschriebenen Ausführungsbeispiele enthalten.

Der Federraum (80) einer jeden Ventilscheibe (1) ist mit dem Tank (74) verbunden. Wie in Figur 4 dargestellt, ist eine der Stirnflächen des Steuerschiebers (8), die in den Federraum (80) hineinragt, durch das in dem Federraum (80) vorhandene Druckmittel beaufschlagt. Da die Koppelstange (26) an dem Steuerschieber (8) angeordnet ist und aus dem Federgehäuse (78) herausgeführt ist, ist die eine Stirnfläche nur zum Teil mit Druckmittel beaufschlagt, insbesondere zu mindestens 80%.

Alternativ oder ergänzend dazu ist ein Steuerschieber (8) auf beiden Seiten stirnseitig mit dem Tank (74) verbunden. Dadurch werden vorteilhafterweise Druckschwankungen im Tank (74), insbesondere in einem Tankrücklauf, ausgeglichen, so dass sie praktisch keine Auswirkung auf den Steuerschieber (8) haben. Eine in Figur 1 auf der linken Seite dargestellte andere der Stirnflächen des Steuerschiebers (8) kann vorteilhafterweise mit dem Tank (74) verbunden sein, wobei die andere Stirnfläche vollständig mit Druckmittel beaufschlagt ist. Je näher der teilweise mit Druckmittel beaufschlagte Anteil an 100% ist, desto weniger Einfluss haben in einem Tankrücklauf herrschende Druckschwankungen auf den Steuerschieber (8). Ein Anteil der nur teilweise mit Druckmittel beaufschlagten anderen Stirnfläche von 90% oder 95% ist deswegen bevorzugt.

Der Federraum (80) ist mit einem die Koppelstange (26) umschließenden in Figur 4 dargestellten O-Ring (86) abgedichtet. Der O-Ring (86) dichtet den Hydraulikbereich mit Druckmittel von einem Motorbereich, in dem der Elektromotor angeordnet ist, ab.

Offenbart ist eine Ventilscheibe, die innerhalb eines Grundkörpers einen Steuerschieber enthält, der entlang einer Mittelachse verschiebbar ist. Durch eine Verschiebung des Steuerschiebers ist eine Verbindung zwischen fluidführenden Leitungen und Arbeitsanschlüssen herstellbar oder trennbar. Die Verschiebung des Steuerschiebers wird erreicht durch ein von einem Elektromotor angetriebenes Zahnradgetriebe, dessen rotatorische Bewegung durch eine Zahnstange in eine translatorische Bewegung umgewandelt ist. Über eine biegeelastische Koppelstange ist der Steuerschieber mit der Zahnstange verbunden und kann so in die gewünschte Stellung verschoben werden. Über ein jeweiliges Verbinden der beiden stirnseitigen Flächen des Steuerschiebers mit einem Druckmitteltank sind in einem Tankrücklauf herrschende Druckspitzen ausgleichbar, die somit keine praktische Auswirkung auf den Steuerschieber haben.

### Bezugszeichenliste:

- 1: Ventilscheibe
- 2: Grundkörper
- 4: Anlageebene
- 6: Arbeitsanschluss
- 8: Steuerschieber
- 10: Mittelachse
- 12: Zahnradgetriebe
- 14: Elektromotor
- 16: Antriebsachse des Elektromotors
- 18: Stromanschluss
- 20: Lageregeleinrichtung
- 22: Zahnstange
- 24: Verzahnung der Zahnstange
- 26: Koppelstange
- 28: etwa zylinderförmiger Abschnitt der Koppelstange
- 30: Durchmesser des zylinderförmigen Abschnitts der Koppelstange
- 32: Länge des zylinderförmigen Abschnitts der Koppelstange
- 34: erstes Ausgangszahnrad
- 36: erstes Gegenzahnrad
- 38: erste Drehachse
- 40: zweites Ausgangszahnrad
- 42: zweites Gegenzahnrad
- 44: zweite Drehachse
- 46: drittes Ausgangszahnrad
- 48: Doppelzahnrad
- 50: erstes Stirnrad des Doppelzahnrads
- 52: zweites Stirnrad des Doppelzahnrads
- 54: vierte Drehachse
- 56: erstes Eingangszahnrad
- 58: zweites Eingangszahnrad
- 60: drittes Eingangszahnrad
- 62: dritte Drehachse
- 64: Gehäuse
- 66: Anlagefläche
- 68: Ventilblock
- 70: Anschlussplatte
- 72: Endplatte
- 74: Tank
- 76: Pumpe
- 78: Federgehäuse
- 80: Federraum
- 82: Schraubenfeder
- 84: Federteller
- 86: Dichtung
- 88: Stellungserfassungseinrichtung
- 90: Permanentmagnet
- 92: Sensor
- 94: Abschirmplatte

## Patentansprüche

1. Ventilscheibe mit einem Grundkörper (2), in dem ein Steuerschieber (8) bewegbar aufgenommen ist, und mit einem Zahnradgetriebe (12), und mit einem Elektromotor (14), wobei der Elektromotor (14) in Drehantriebsverbindung mit dem Zahnradgetriebe (12) steht, und wobei das Zahnradgetriebe (12) eine mit dem Steuerschieber (8) verbundene Zahnstange (22) antreibt, **dadurch gekennzeichnet, dass** die Zahnstange (22) über eine biegeelastische Koppelstange (26) fest mit dem Steuerschieber (8) verbunden ist, wobei auf mindestens zwei gegenüber liegenden Seiten der Zahnstange (22) eine Verzahnung (24) ausgebildet ist, oder die Zahnstange (22) eine umlaufende Verzahnung (24) aufweist, und wobei das Zahnradgetriebe (12) ein erstes Ausgangszahnrad (34) und ein erstes Gegenzahnrad (36) aufweist, die beide mit der Verzahnung (24) in Eingriff sind, und deren etwa parallel ausgerichtete Drehachsen (38, 44) auf gegenüberliegenden Seiten der Zahnstange (22) achsensymmetrisch zu einer Mittelachse (10) angeordnet sind.

2. Ventilscheibe nach Anspruch 1, wobei der Grundkörper (2) zwei etwa parallele Anlageebenen (4) aufweist, und wobei die Mittelachse (10) des Steuerschiebers (8) etwa parallel zu den Anlageebenen (4) ausgerichtet ist, und wobei das Zahnradgetriebe (12), der Elektromotor (14) und die Zahnstange (22) zwischen den beiden Anlageebenen (4) angeordnet sind.

3. Ventilscheibe nach Anspruch 2, wobei die Koppelstange (26) und die Zahnstange (22) etwa in einer Flucht mit der Mittelachse (10) des Steuerschiebers (8) angeordnet sind.

4. Ventilscheibe nach einem der Ansprüche 1 bis 3, wobei die Koppelstange (26) mindestens einen etwa zylinderförmigen Abschnitt (28) mit einem Durchmesser (30) zwischen 1 mm und 6 mm aufweist.

5. Ventilscheibe nach Anspruch 1, wobei das erste Ausgangszahnrad (34) derart mit einem zweiten Ausgangszahnrad (40) drehfest verbunden ist, dass sie zusammen um die gemeinsame erste Drehachse (38) drehbar sind, und das erste Gegenzahnrad (36) derart mit einem zweiten Gegenzahnrad (42) drehfest verbunden ist, dass sie zusammen um die gemeinsame zweite Drehachse (44) drehbar sind, wobei das zweite Ausgangszahnrad (40) mit dem zweiten Gegenzahnrad (42) in Eingriff ist.

6. Ventilscheibe nach Anspruch 1 oder 5, wobei das erste Ausgangszahnrad (34) derart mit einem dritten Ausgangszahnrad (46) drehfest verbunden ist, dass sie zusammen um die gemeinsame erste Drehachse (38) drehbar sind.

7. Ventilscheibe nach einem der Ansprüche 1 bis 6, wobei das Zahnradgetriebe (12) ein Doppelzahnrad (48) aufweist, das ein erstes Stirnrad (50) und ein damit drehfest verbundenes zweites Stirnrad (52) enthält, die zusammen um eine gemeinsame vierte Drehachse (54) drehbar sind, wobei das erste Stirnrad (50) mit dem dritten Ausgangszahnrad (46) in Eingriff ist.

8. Ventilscheibe nach einem der Ansprüche 2 bis 7, wobei ein Gehäuse (64) vorgesehen ist, das den Elektromotor (14) und das Zahnradgetriebe (12) umschließt, wobei das Gehäuse (64) mit dem Grundkörper (2) verbunden ist und zwei gegenüberliegende Anlageflächen (66) aufweist, die mit den Anlageebenen (4) etwa in einer Ebene liegen.

9. Ventilscheibe nach einem der Ansprüche 1 bis 8, wobei an dem Grundkörper (2) oder an dem Gehäuse (64) ein Federraum (80) vorgesehen ist, der mit einem Tank (74) verbunden ist und/oder der Steuerschieber (8) auf beiden Seiten stirnseitig mit einem Tank (74) verbunden ist.

10. Ventilscheibe nach Anspruch 9, wobei eine der Stirnflächen des Steuerschiebers (8) zu mindestens 80% mit Druckmittel beaufschlagt ist und eine andere der Stirnflächen des Steuerschiebers (8) zu 100% mit Druckmittel beaufschlagt ist.

11. Ventilblock (10) mit mehreren Ventilscheiben (1) nach einem der Ansprüche 2 bis 8, wobei die Anlageebenen (4) unmittelbar benachbarter Ventilscheiben (1) zusammenfallen.

## Claims

1. Valve plate having a main body (2) in which a control slide (8) is received movably, and having a gearwheel mechanism (12), and having an electric motor (14), the electric motor (14) being rotationally drive-connected to the gearwheel mechanism (12), and the gearwheel mechanism (12) driving a rack (22) which is connected to the control slide (8), **characterized in that** the rack (22) is connected fixedly to the control slide (8) via a resiliently flexible coupling rod (26), a toothing system (24) being configured on at least two opposite sides of the rack (22), or the rack (22) having a circumferential toothing system (24), and the gearwheel mechanism (12) having a first output gearwheel (34) and a first corresponding gearwheel (36) which are both in engagement with the toothing system (24) and the rotational axes (38, 44) of which, which are oriented approximately in parallel, being arranged on opposite sides of the rack (22) in an axially symmetrical manner with respect to a centre axis (10).

2. Valve plate according to Claim 1, the main body (2) having two approximately parallel bearing planes (4), and the centre axis (10) of the control slide (8) being oriented approximately parallel to the bearing planes (4), and the gearwheel mechanism (12), the electric motor (14) and the rack (22) being arranged between the two bearing planes (4).

3. Valve plate according to Claim 2, the coupling rod (26) and the rack (22) being arranged approximately aligned with the centre axis (10) of the control slide (8).

4. Valve plate according to one of Claims 1 to 3, the coupling rod 926) having at least one approximately cylindrical section (28) with a diameter (30) of between 1 mm and 6 mm.

5. Valve plate according to Claim 1, the first output gearwheel (34) being connected fixedly to a second output gearwheel (40) so as to rotate with it in such a way that they can together rotate about a common first rotational axis (38), and the first corresponding gearwheel (36) being connected fixedly to a second corresponding gearwheel (42) so as to rotate with it in such a way that they can together rotate about the common second rotational axis (44), the second output gearwheel (40) being in engagement with the second corresponding gearwheel (42).

6. Valve plate according to Claim 1 or 5, the first output gearwheel (34) being connected fixedly to a third output gearwheel (46) so as to rotate with it in such a way that they can together rotate about the common first rotational axis (38).

7. Valve plate according to one of Claims 1 to 6, the gearwheel mechanism (12) having a double gearwheel (48) which comprises a first spur gear (50) and a second spur gear (52) which is connected fixedly to the former so as to rotate with it, which spur gears (50, 52) can together rotate about a common fourth rotational axis (54), the first spur gear (50) being in engagement with the third output gearwheel (46).

8. Valve plate according to one of Claims 2 to 7, a housing (64) being provided which encloses the electric motor (14) and the gearwheel mechanism (12), the housing (64) being connected to the main body (2) and having two bearing faces (66) which lie opposite one another and lie approximately in one plane with the bearing planes (4).

9. Valve plate according to one of Claims 1 to 8, a spring space (80) which is connected to a tank (74) being provided on the main body (2) or on the housing (64) and/or the control slide (8) being connected on the end side on both sides to a tank (74).

10. Valve plate according to Claim 9, at least 80% of one of the end faces of the control slide (8) being loaded with pressure medium, and up to 100% of another of the end faces of the control slide (8) being loaded with pressure medium.

11. Valve block (10) having a plurality of valve plates (1) according to one of Claims 2 to 8, the bearing planes (4) of immediately adjacent valve plates (1) coinciding.

## Revendications

1. Disque de soupape comprenant un corps de base (2) dans lequel est reçu de manière déplaçable un coulisseau de commande (8), et une transmission à engrenages (12), et un moteur électrique (14), le moteur électrique (14) étant en liaison d'entraînement en rotation avec la transmission à engrenages (12), et la transmission à engrenages (12) entraînant une crémaillère (22) raccordée au coulisseau de commande (8), **caractérisé en ce que** la crémaillère (22) est connectée fixement au coulisseau de commande (8) par le biais d'une tige d'accouplement élastiquement flexible (26), une denture (24) étant réalisée sur au moins deux côtés opposés de la crémaillère (22), ou la crémaillère (22) présentant une denture périphérique (24), et la transmission à engrenages (12) présentant une première roue dentée de sortie (34) et une première roue dentée conjuguée (36), qui sont toutes les deux en prise avec la denture (24), et dont les axes de rotation (38, 44) orientés approximativement parallèlement sont disposés sur des côtés opposés de la crémaillère (22) avec une symétrie axiale par rapport à un axe médian (10).

2. Disque de soupape selon la revendication 1, dans lequel le corps de base (2) présente deux plans d'appui (4) approximativement parallèles, et dans lequel l'axe médian (10) du coulisseau de commande (8) est orienté approximativement parallèlement aux plans d'appui (4), et dans lequel la transmission à engrenages (12), le moteur électrique (14) et la crémaillère (22) sont disposés entre les deux plans d'appui (4).

3. Disque de soupape selon la revendication 2, dans lequel la tige d'accouplement (26) et la crémaillère (22) sont disposées approximativement en affleurement avec l'axe médian (10) du coulisseau de commande (8).

4. Disque de soupape selon l'une quelconque des revendications 1 à 3, dans lequel la tige d'accouplement (26) présente au moins une portion approximativement cylindrique (28) avec un diamètre (30) compris entre 1 mm et 6 mm.

5. Disque de soupape selon la revendication 1, dans lequel la première roue dentée de sortie (34) est connectée de manière solidaire en rotation à une deuxième roue dentée de sortie (40), de telle sorte qu'elles puissent tourner ensemble autour du premier axe de rotation commun (38), et la première roue dentée conjuguée (36) est connectée de manière solidaire en rotation à une deuxième roue dentée conjuguée (42) de telle sorte qu'elles puissent tourner ensemble autour du deuxième axe de rotation commun (44), la deuxième roue dentée de sortie (40) étant en prise avec la deuxième roue dentée conjuguée (42).

6. Disque de soupape selon la revendication 1 ou 5, dans lequel la première roue dentée de sortie (34) est connectée de manière solidaire en rotation à une troisième roue dentée de sortie (46) de telle sorte qu'elles puissent tourner ensemble autour du premier axe de rotation commun (38).

7. Disque de soupape selon l'une quelconque des revendications 1 à 6, dans lequel la transmission à engrenages (12) présente une roue dentée double (48) qui contient un premier pignon droit (50) et un deuxième pignon droit (52) connecté de manière solidaire en rotation à celui-ci, lesquels peuvent tourner ensemble autour d'un quatrième axe de rotation commun (54), le premier pignon droit (50) étant en prise avec la troisième roue dentée de sortie (46).

8. Disque de soupape selon l'une quelconque des revendications 2 à 7, dans lequel un boîtier (64) est prévu, lequel entoure le moteur électrique (14) et la transmission à engrenages (12), le boîtier (64) étant connecté au corps de base (2) et présentant deux surfaces d'appui opposées (66) qui sont situées approximativement dans un plan avec les plans d'appui (4).

9. Disque de soupape selon l'une quelconque des revendications 1 à 8, dans lequel un espace de ressort (80) est prévu au niveau du corps de base (2) ou au niveau du boîtier (64), lequel est connecté à un réservoir (74) et/ou le coulisseau de commande (8) est connecté des deux côtés du côté frontal à un réservoir (74).

10. Disque de soupape selon la revendication 9, dans lequel l'une des surfaces frontales du coulisseau de commande (8) est sollicitée au moins à 80 % avec un fluide sous pression et une autre des surfaces frontales du coulisseau de commande (8) est sollicitée à 100 % avec du fluide sous pression.

11. Bloc-soupape (10) comprenant plusieurs disques de soupape (1) selon l'une quelconque des revendications 2 à 8, les plans d'appui (4) de disques de soupape directement adjacents (1) coïncidant les uns avec les autres.
